**Europäisches Patentamt**

**European Patent Office**

**Office européen des brevets**

(19)

(11) Publication number : **0 334 887 B1**

# (12) EUROPEAN PATENT SPECIFICATION

(45) Date of publication of patent specification :
**01.04.92 Bulletin 92/14**

(51) Int. Cl.⁵ : **B27N 3/14,** G01G 11/00

(21) Application number : **88900156.6**

(22) Date of filing : **11.12.87**

(86) International application number :
**PCT/SE87/00593**

(87) International publication number :
**WO 88/04224 16.06.88 Gazette 88/13**

(54) DEVICE AT FIBRE BOARD MANUFACTURE.

(30) Priority : **11.12.86 SE 8605330**

(43) Date of publication of application :
**04.10.89 Bulletin 89/40**

(45) Publication of the grant of the patent :
**01.04.92 Bulletin 92/14**

(84) Designated Contracting States :
**AT DE FR GB SE**

(56) References cited :
**US-A- 2 889 030**

(73) Proprietor : **ABB FLÄKT AKTIEBOLAG**
**Box 81 001**
**S-104 81 Stockholm (SE)**

(72) Inventor : **ASBERG, Per, A.**
**Skeppargatan 96, 5 tr**
**S-115 30 Stockholm (SE)**

(74) Representative : **Dahlstrand, Björn**
**ABB FLÄKT AB**
**S-120 86 Stockholm (SE)**

EP 0 334 887 B1

## Description

This invention relates to a device for the continuous weighing of webs at the manufacture of fibre board.

Fibre board is manufactured of fibre material, which together with a suitable binding agent is applied on a forming wire, so that a relatively thick web is formed. This web is heated and pressed in one or several steps until the desired final product is obtained. The quality of the fibre board depends a.o. on how uniformly the fibres are distributed in the web. For being able to adjust the distribution, the web is weighed prior to the final pressing operation. The web ususally is weighed by passing it over a scales plate located after the forming wire. This implies, however, that the distance between the weighing machine and fibre forming means is great and thereby delays adjustment. The fibre distribution then cannot be controlled at optimum, and the fibre boards will be non-uniform.

Due to the present invention, the weighing device can be positioned closer to the fibre forming means, which implies that the aforesaid problem is eliminated and the fibre board quality is improved. The weighing device according to the invention, thus, can be positioned at any place along the forming wire and thereby so close to the forming means, that a rapid and effective adjustment can be carried out.

According to the invention, the weighing device is located directly after the forming means. The weighing device comprises a scales plate, which is located above the wire, and a separate doctor blade located at the leading edge of the scales plate is intended to lift the web from the wire so that the web can slide over the scales plate and thereafter return to the wire.

Fibre board can be manufactured by dry forming or wet forming. At dry forming a dispersion of fibres and air is blown against the forming wire, whereby the fibres are deposited on the wire while the air passes therethrough. At wet forming a fibre suspension is applied on the forming wire whereafter the liquid is drained off through the wire. The forming means, thus, comprise devices for distributing the fibres over the forming wire as uniformly as possible. The forming means further comprise devices for smoothing the upper surface of the web. This can be effected, for example, by means of a mill or the like. By means of signals from the weighing device the forming means can be controlled so that the fibre content of the web is maintained at the desired level and a uniform quality of the final product is obtained.

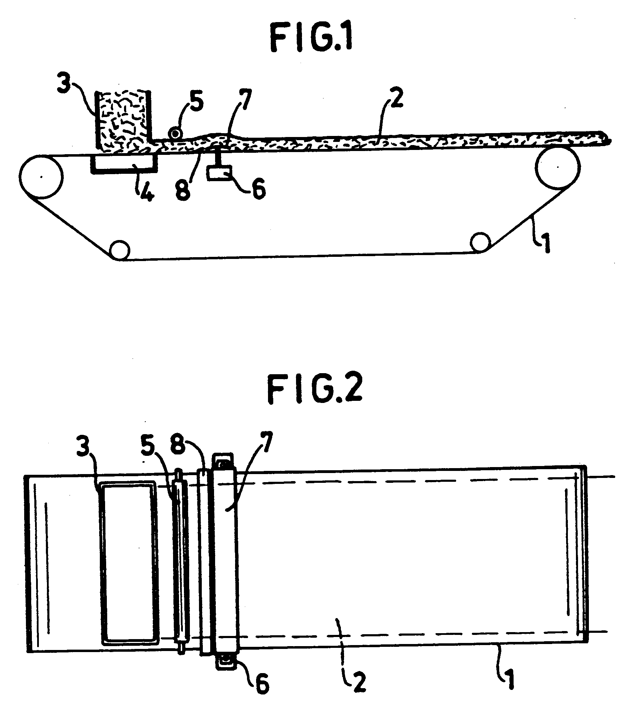

It is also possible to use several forming means, in which case the web is built-up in steps. For the surface layers and central layers different fibre materials can be used. A first layer, for example, can contain 20 per cent of the fibre amount, a second layer can contain 60 per cent, and a third layer 20 per cent. A weighing device according to the invention then can be used after each layer applied. The invention is described in the following in greater detail, with reference to the accompanying Figures showing schematically an embodiment of the device according to the invention. Fig. 1 is a lateral view of the device, and Fig. 2 shows the device seen from above.

On a horizontal forming wire 1 fibre material impregnated with binding agent is deposited to a web 2 by means of a distribution device 3. The fibre material is dispersed in air, whereby the air is sucked off through the wire 1 to a suction box 4 located beneath at the same time as the fibres are deposited on the wire. After the distribution device 3 a mill 5 is located above the web 2, which mill 5 has the object to smooth the upper surface of the web 2.

The distribution device 3 and mill 5 together constitute a forming device, which determines the fibre content and thickness of the web 2. Directly after the forming device a weighing device 6 is located. The distance between the forming device 3,5 and weighing device 6 shall be kept as short as possible. From the wire 1 the web 2 is transferred to subsequent means (not shown) for heating the web and pressing it to fibre board.

The weighing device 6 comprises a scales plate 7, which is located adjacent the upper side of the wire 1 and extends across the wire. At the leading edge of the scales plate 7 a separate doctor blade 8 is located to lift the web 2 from the wire. The doctor blade 8 is not connected to the scales plate 7, but attached on both sides of the wire 1 so as not to influence the weighing. The web 2 is lifted up by the doctor blade 8, slides over the scales plate 7 and returns from there to the wire 1. The scales plate 7 should have an extension in the direction of web movement of 200 - 500 mm. The surface of the scales plate shall have low friction, so that the web easily can slide over the surface. The scales plate 7 is suspended on both sides of the wire 1. The weight indicated is utilized for adjusting the forming device, i.e. distribution device 3 and/or mill 5. Deviation from desired weight, thus, rapidly can be corrected, because the distance between the weighing device 6 and forming device 3,5 is short.

By this arrangement it is possible in a simple and inexpensive way to manufacture fibre board of a quality, which is higher and more uniform than it heretofore has been possible to obtain.

The invention, of course, is not restricted to the embodiment shown and described, but can be varied within the scope of the invention idea.

## Claims

1. A device for continuously weighing a web (2) at the manufacture of fibre board, comprising a running forming wire (1) and forming device (35) for applying fibre material on the wire (1) and adjusting the thickness of the web (2), **characterized in** that a weighing device (6) is located directly after the forming device (3,5), that the weighing device (6) comprises a scales plate (7) located above the wire (1) and a separate doctor blade (8) located at the leading edge of the scales plate (7) intended to lift the web from the wire, so that the web can slide over the scales plate (7) and thereafter return to the wire.

2. A device as defined in claim 1, **characterized in** that the weighing device (6) is capable to control the fibre supply through a distribution device (3) comprised in the forming device.

3. A device as defined in claim 1 or 2, **characterized in** that the weighing device (6) is capable to adjust the thickness of the web through a mill (5) comprised in the forming device.

4. A device as defined in any one of the preceding claims, **characterized in** that the scales plate (7) has an extension in the direction of web movement of 200 - 500 mm.

5. A device as defined in any one of the preceding claims where the web (2) is built-up in steps by several forming devices (3,5), **characterized in** that a weighing device (6) is located directly after each forming device.

## Patentansprüche

1. Vorrichtung zum kontinuierlichen Wiegen einer Bahn (2) bei der Herstellung von Hartpappe, die ein laufendes Formsieb (1) und eine Formvorrichtung (3, 5) zum Aufbringen von Fasermaterial auf das Sieb (1) und zur Einstellung der Stärke der Bahn (2) umfaßt, dadurch gekennzeichnet, daß unmittelbar nach der Formvorrichtung (3, 5) eine Wiegevorrichtung (6) angeordnet ist, daß die Wiegevorrichtung (6) eine über dem Sieb (1) angeordnete Wägeplatte (7) und eine an der Vorderkante der Wägeplatte (7) angeordnete getrennte Rakel (8) umfaßt, die die Bahn so vom Sieb abheben soll, daß die Bahn über die Wägeplatte (7) gleiten und danach zum Sieb zurückkehren kann.

2. Vorrichtung nach Anspruch 1, dadurch gekennzeichnet, daß die Wiegevorrichtung (6) in der Lage ist, die Faserzufuhr durch eine in der Formvorrichtung vorhandene Verteilvorrichtung (3) zu steuern.

3. Vorrichtung nach Anspruch 1 oder 2, dadurch gekennzeichnet, daß die Wiegevorrichtung (6) in der Lage ist, die Stärke der Bahn durch eine in der Formvorrichtung vorhandene Walze (5) einzustellen.

4. Vorrichtung nach einem der vorhergehenden Ansprüche, dadurch gekennzeichnet, daß die Wägeplatte (7) eine Ausdehnung in der Bahnbewegungsrichtung von 200 - 500 mm hat.

5. Vorrichtung nach einem der vorhergehenden Ansprüche, bei der die Bahn (2) stufenweise durch mehrere Formvorrichtungen (3, 5) aufgebaut wird, dadurch gekennzeichnet, daß unmittelbar nach jeder Formvorrichtung eine Wiegevorrichtung (6) angeordnet ist.

## Revendications

1. Dispositif pour la pesée continue d'une bande (2) à la fabrication de panneau de fibres, comprenant une toile sans fin défilante (1) de formation et un appareil de formation (3, 5) pour appliquer la matière en fibres sur la toile sans fin (1) et ajuster l'épaisseur de la bande (2), caractérisé en ce qu'un appareil de pesée (6) est situé directement après l'appareil de formation (3, 5), en ce que l'appareil de pesée (6) comprend une plaque formant peson (7) située au-dessus de la toile sans fin (1) et une lame docteur séparée (8) située au bord de tête de la plaque formant peson (7), destinée à soulever la bande de la toile sans fin, de façon telle que la bande puisse glisser sur la plaque formant peson (7) et retourner ensuite sur la toile sans fin.

2. Dispositif suivant la revendication 1, caractérisé en ce que l'appareil de pesée (6) est capable de commander l'alimentation des fibres par l'intermédiaire d'un appareil de distribution (3) compris dans l'appareil de formation.

3. Dispositif suivant la revendication 1 ou 2, caractérisé en ce que l'appareil de pesée (6) est capable d'ajuster l'épaisseur de la bande (2) au moyen d'un rouleau (5) compris dans l'appareil de formation.

4. Dispositif suivant l'une ou l'autre des revendications précédentes, caractérisé en ce que la plaque formant peson (7) a une dimension de 200 -500 mm dans le sens du mouvement de la bande.

5. Dispositif suivant l'une ou l'autre des revendications précédentes, où la bande (2) est réalisée par étapes dans plusieurs appareils de formation (3, 5), caractérisé en ce qu'un appareil de pesage (6) est placé directement après chaque appareil de formation.

# FIG.1

# FIG.2